(19) Europäisches Patentamt European Patent Office Office européen des brevets

(11) **EP 2 307 672 B1**

(12) **FASCICULE DE BREVET EUROPEEN**

(45) Date de publication et mention de la délivrance du brevet:
**11.02.2015 Bulletin 2015/07**

(21) Numéro de dépôt: **09797572.6**

(22) Date de dépôt: **18.06.2009**

(51) Int Cl.:
*F01D 21/00* (2006.01)     *G01H 1/00* (2006.01)

(86) Numéro de dépôt international:
**PCT/FR2009/051158**

(87) Numéro de publication internationale:
**WO 2010/007277 (21.01.2010 Gazette 2010/03)**

(54) **PROCÉDÉ ET SYSTÈME DE DÉTERMINATION DE LA POSITION ANGULAIRE D'UN ROTOR DE TURBORÉACTEUR**

VERFAHREN UND SYSTEM ZUR BESTIMMUNG DER WINKELPOSITION EINES TURBOMASCHINENROTORS

METHOD ANS SYSTEM FOR THE DETERMINATION OF THE ANGULAR POSITION OF A TURBOMACHINE ROTOR

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **23.06.2008   FR 0854118**

(43) Date de publication de la demande:
**13.04.2011   Bulletin 2011/15**

(73) Titulaire: **Snecma**
**75015 Paris (FR)**

(72) Inventeur: **GALIVEL, Jean-Pierre**
**F-77176 Savigny Le Temple (FR)**

(74) Mandataire: **Boura, Olivier et al**
**Cabinet Beau de Loménie**
**158, rue de l'Université**
**75340 Paris Cedex 07 (FR)**

(56) Documents cités:
**EP-A- 1 118 920     EP-A- 1 752 754**
**GB-A- 2 208 548     GB-A- 2 319 812**
**US-A- 5 258 923     US-B1- 6 456 945**

**Description**

Arrière-plan de l'invention

L'invention concerne la surveillance de moteurs d'aéronef et plus particulièrement de moteurs d'aéronef à turbine à gaz. L'invention a notamment une application privilégiée mais non limitative dans la surveillance de turboréacteurs à double-corps.

La surveillance du fonctionnement d'un moteur (ou « monitoring » en anglais) permet avantageusement d'anticiper les arrêts moteur liés à une panne d'un composant. Elle permet également de préparer les interventions de maintenance sur le moteur en ayant connaissance à l'avance des problèmes à résoudre.

De façon classique, cette surveillance repose sur le traitement de signaux enregistrés par des capteurs de fonctionnement du moteur, tels que par exemple des capteurs de vibrations, de vitesse, de température ou de pression. En fonction des caractéristiques du moteur et des organes surveillés, il est possible d'identifier le début d'une défaillance d'un composant et de programmer une intervention sur ce composant avant que cette défaillance ne soit totale et ne conduise à un arrêt moteur.

Dans le cas notamment des turboréacteurs à double-corps, il peut être utile par ailleurs de connaître la position angulaire des différents rotors du turboréacteur (par exemple des arbres rotatifs), et ce afin de permettre une analyse plus précise des défaillances identifiées (par exemple l'évolution d'une aube d'un rotor présentant un balourd).

A cette fin, il est connu d'utiliser un capteur de vitesse équipé d'une roue dentée solidaire du rotor, et dotée d'une dent différente des autres. Une telle roue est par exemple décrite dans le document EP 1 777 526. La dent différente de la roue dentée génère un signal différent de ceux générés par les autres dents, de sorte qu'il est possible d'identifier aux instants où ce signal est détecté par le capteur de vitesse, la position angulaire du rotor.

Toutefois, pour déterminer ainsi la position angulaire d'un rotor à partir de l'analyse des signaux mesurés par un tel capteur de vitesse, il est nécessaire que la mesure des signaux soit réalisée directement sur le rotor dont on veut connaître la position angulaire.

Or, s'il est possible de positionner aisément un capteur de vitesse équipé d'une roue dentée sur un arbre du rotor basse-pression d'un turboréacteur double-corps, il n'en est pas de même pour l'arbre du rotor haute-pression de ce turboréacteur qui est difficilement accessible. La mise en place d'un capteur de vitesse équipé d'une roue dentée sur un arbre du rotor haute-pression nécessiterait alors d'avoir recours à des dispositifs complexes et coûteux, tels que par exemple celui décrit dans le document US 4 075 562, qui sont par ailleurs difficilement intégrables dans le contexte d'un ensemble multi-rotors.

US-A-5 258 923 décrit un procédé et un système de détermination directe de la position angulaire d'un rotor.

Objet et résumé de l'invention

La présente invention a donc pour but principal de pallier les inconvénients précités. A cette fin, l'invention vise un procédé de détermination de la position angulaire d'un premier rotor de turboréacteur, consistant à :

- générer au moins une vibration au cours d'une rotation du premier rotor, chaque vibration étant générée lors du passage du premier rotor par une même position angulaire de référence ;
- détecter les vibrations générées ;
- obtenir la position angulaire à un instant donné d'un second rotor du turboréacteur par rapport à la position angulaire qu'il occupait à un instant de référence représentatif de la détection d'une des vibrations, ledit second rotor étant couplé en rotation au premier rotor et ayant une vitesse de rotation différente de la vitesse de rotation de celui-ci ; et
- déterminer, à partir de la position angulaire du second rotor, la position angulaire du premier rotor à cet instant donné.

Corrélativement, l'invention vise également un système de détermination de la position angulaire d'un premier rotor de turboréacteur, caractérisé en ce qu'il comprend :

- des moyens de génération de vibrations au cours d'une rotation du premier rotor, chaque vibration étant générée lors du passage du premier rotor par une même position angulaire de référence ;
- des moyens de détection des vibrations générées ;
- des moyens d'obtention de la position angulaire à un instant donné d'un second rotor du turboréacteur par rapport à la position angulaire qu'il occupait à un instant de référence représentatif de la détection d'une des vibrations, ledit second rotor étant couplé en rotation au premier rotor et ayant une vitesse de rotation différente de la vitesse de rotation de celui-ci ; et
- des moyens de détermination, à partir de la position angulaire du second rotor, de la position angulaire du premier rotor à cet instant donné.

Ainsi, l'invention permet de déterminer la position angulaire d'un rotor sans nécessiter la mise en oeuvre complexe d'un dispositif tel un capteur de vitesse équipé d'une roue dentée sur un rotor difficilement accessible.

L'invention est donc particulièrement avantageuse lorsqu'on désire connaître la position angulaire de l'arbre haute-pression d'un turboréacteur double-corps à un instant donné. Il est alors possible, à partir de la position angulaire à un instant donné d'un arbre d'un boîtier d'entraînement d'accessoires par exemple (second rotor au sens de l'invention), solidaire en rotation de l'arbre haute-pression, d'obtenir la position angulaire de l'arbre haute-pression à cet instant.

Dans un mode particulier de réalisation de l'invention, on obtient la position angulaire du second rotor à partir d'un signal fourni par un capteur et représentatif du défilement des dents d'une roue dentée positionnée sur le second rotor devant ce capteur.

On peut choisir, par exemple, comme instant représentatif de la détection d'une vibration, un instant pour lequel le passage du premier rotor par la position de référence coïncide avec le passage d'une dent de la roue dentée devant le capteur.

Grâce à l'invention, la position angulaire d'un rotor du turboréacteur peut être connue à chaque instant. Il est donc possible d'associer à un événement particulier, tel que par exemple la détection d'un balourd à un instant donné, la position angulaire du rotor à cet instant, ce qui permet une analyse plus précise des défaillances identifiées.

Ainsi, l'invention vise également un procédé de détermination de la position angulaire d'un balourd détecté à un instant donné sur un premier rotor d'un turboréacteur, ce turboréacteur comportant en outre un second rotor couplé en rotation au premier rotor et dont la vitesse de rotation est différente de la vitesse de rotation de celui-ci. Conformément à l'invention, le procédé de détermination de la position angulaire d'un balourd consiste à :

- déterminer la position angulaire du premier rotor à l'instant auquel a été détecté le balourd en fonction de la position angulaire du second rotor, selon un procédé de détermination de la position angulaire d'un rotor conforme à l'invention tel que mentionné précédemment ;
- et à déterminer la position angulaire du balourd à cet instant, à partir de la position angulaire du premier rotor.

De façon très avantageuse, pour détecter la ou les vibrations générées, des capteurs de vibrations déjà présents dans le turboréacteur (par exemple pour la surveillance du turboréacteur) peuvent être utilisés, moyennant un paramétrage de ces capteurs afin qu'ils puissent détecter les vibrations générées conformément à l'invention.

L'invention utilise donc avantageusement des équipements déjà existants au sein du turboréacteur. Il n'est pas nécessaire d'équiper le turboréacteur de moyens supplémentaires de détection de signaux vibratoires.

Dans un mode particulièrement intéressant de l'invention, les moyens de génération de vibrations sont adaptés à ne plus générer de vibration lors du passage du premier rotor par la position angulaire de référence à partir d'un régime de fonctionnement particulier du turboréacteur.

Ainsi, les moyens de génération de vibrations ne sont actifs que durant une période de temps limitée, par exemple lorsque le turboréacteur fonctionne à bas régime. De cette sorte, on évite l'usure des moyens de génération de vibrations et a fortiori les pannes résultant de cette usure.

Les moyens de génération de vibrations peuvent par exemple comporter un cliquet ou une lame souple et une saillie, une vibration étant générée par un choc du cliquet ou une lame souple sur la saillie lors du passage du premier rotor par la position angulaire de référence.

Dans une variante de réalisation, le premier rotor comporte un élément annulaire disposé autour d'une portion annulaire de stator, le cliquet ou la lame souple étant localisé sur la face interne de l'élément annulaire et la saillie sur la face externe de la portion annulaire de stator.

L'invention vise également un turboréacteur comportant au moins un système tel que décrit précédemment.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente une vue schématique en coupe longitudinale d'un turboréacteur conforme à l'invention, dans un mode particulier de réalisation ;
- les figures 2A et 2B représentent de façon schématique des vues en coupe de moyens de génération de vibrations pouvant être utilisés dans un mode particulier de réalisation de l'invention ;
- la figure 3 représente, sous forme d'organigramme, les principales étapes mises en oeuvre du procédé de détermination selon l'invention, dans un mode particulier de réalisation ; et
- la figure 4 représente les principales étapes mises en oeuvre au cours d'une phase d'étalonnage pour déterminer un instant de référence $t_0$, dans un mode particulier de réalisation de l'invention.

Description détaillée d'un mode de réalisation

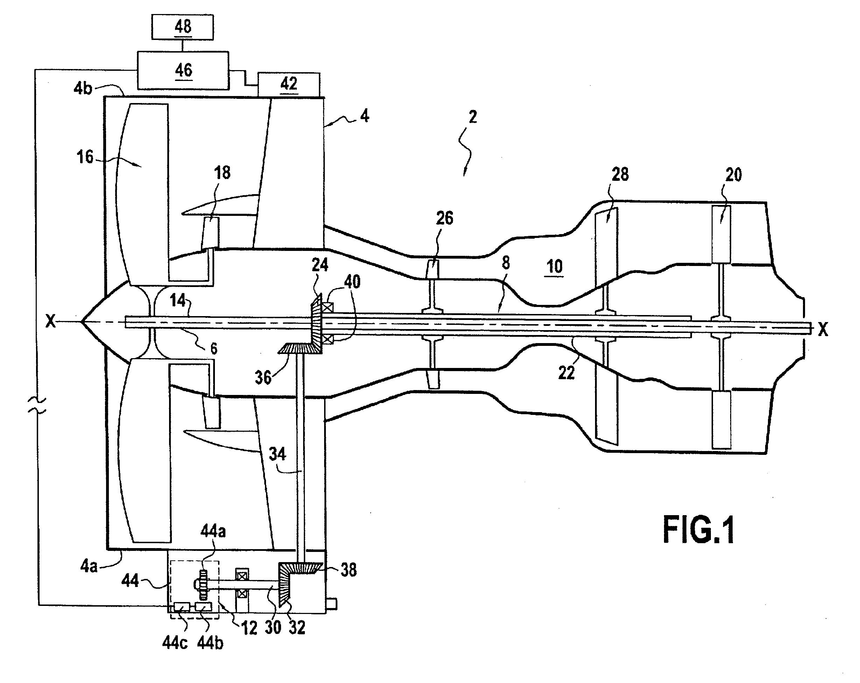

La figure 1 représente de façon schématique et partielle un turboréacteur 2 à double corps et à double flux dans lequel le procédé et le système de détermination selon l'invention peuvent être mis en oeuvre. Bien entendu, la présente invention peut également s'appliquer à d'autres types de moteur d'aéronef dont on veut surveiller le fonctionnement.

De façon bien connue en soi, le turboréacteur 2 d'axe longitudinal X-X se compose notamment d'un carter de soufflante 4, d'un corps basse-pression 6, d'un corps haute-pression 8, d'une chambre de combustion 10 et d'un boîtier d'entraînement d'accessoires 12 (aussi communément appelé AGB, pour « Accessory Gear Box »).

Le corps basse-pression 6 comporte un arbre basse-pression 14 centré sur l'axe longitudinal X-X, une soufflante 16 montée sur l'extrémité avant de l'arbre basse-pression, un compresseur basse-pression 18 fixé sur la soufflante en aval de celle-ci, et une turbine basse-pression 20 montée sur l'extrémité arrière de l'arbre basse-pression.

Le corps haute-pression 8 comporte un arbre haute-pression 22 disposé concentriquement autour de l'arbre basse-pression 14, un pignon conique 24 monté à l'extrémité avant de l'arbre haute-pression, un compresseur haute-pression 26 monté sur l'arbre haute-pression en aval du pignon 24 et une turbine haute-pression 28 montée sur l'extrémité arrière de l'arbre haute-pression.

Pour des raisons de clarté, les différents compresseurs et turbines des corps basse-pression et haute-pression du turboréacteur 2 ont été représentés sur la figure 1 avec un unique étage d'aubes. Bien entendu, et de façon bien connue en soi, ces éléments peuvent porter plusieurs étages d'aubes.

Le boîtier d'entraînement d'accessoires 12 est fixé, par exemple, sur une face inférieure 4a du carter de soufflante 4. Ce boîtier 12 comporte un arbre dit « accessoire » 30 portant à son extrémité arrière un pignon conique 32. L'arbre 30 du boîtier d'entraînement d'accessoires 12 est entraîné en rotation par l'arbre haute-pression 22 via un arbre de renvoi 34 portant un pignon conique 36 à son extrémité supérieure et un pignon conique 38 à son extrémité inférieure.

Dans la suite de la description, on notera $k$ ($k \neq 1$) le rapport d'engrenage entre l'arbre haute-pression 22 et l'arbre accessoire 30, ce qui signifie ici que lorsque l'arbre accessoire 30 réalise une rotation, l'arbre haute-pression 22 réalise $k$ rotation(s) (i.e., la vitesse de rotation de l'arbre haute-pression est égale à $k$ fois la vitesse de rotation de l'arbre accessoire 30).

Dans l'exemple décrit ici, on envisage la détermination de la position angulaire de l'arbre haute-pression 22 du turboréacteur 2 (premier rotor au sens de l'invention) à partir de la position angulaire de l'arbre accessoire 30 (second rotor au sens de l'invention) du boîtier d'entraînement d'accessoires. Toutefois, l'invention pourrait également s'appliquer à d'autres arbres du turboréacteur 2.

De façon générale dans l'invention, la position angulaire d'un rotor est définie par la position angulaire d'un marqueur (point fixe) prédéterminé situé sur ce rotor (par exemple un cran anti-rotation situé sur le rotor), par rapport à un point remarquable invariant.

Conformément à l'invention, pour déterminer la position angulaire de l'arbre haute-pression 22, le turboréacteur 2 comporte des moyens de génération de vibrations 40. Plus précisément, ces moyens 40 sont adaptés à générer des vibrations au cours de la rotation de l'arbre haute-pression 22, une vibration étant générée lors du passage de l'arbre haute-pression par une même position angulaire de référence notée $\theta_0$, non représentée sur la figure 1. Par souci de simplification dans la description, la position angulaire de référence $\theta_0$ correspond au point remarquable invariant ($\theta_0 = 0$), situé par exemple « à midi » par rapport à l'axe longitudinal X-X.

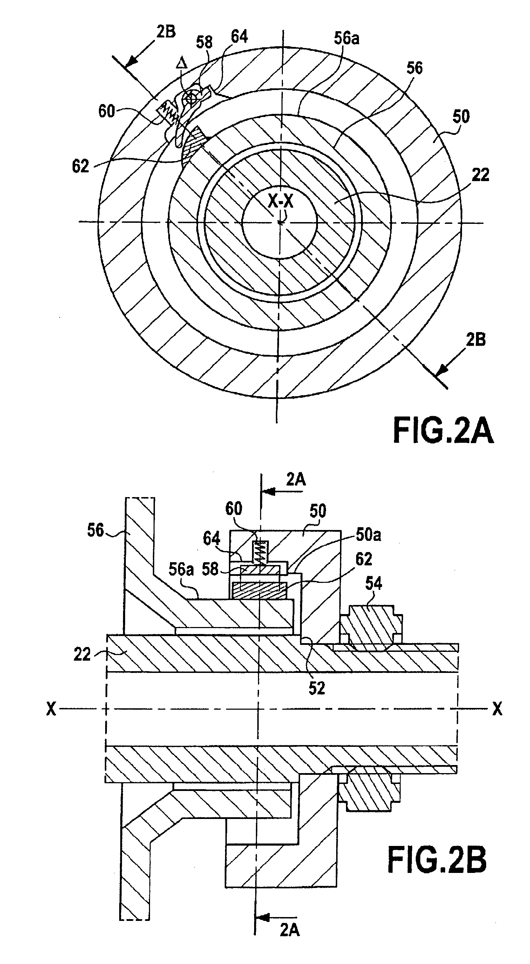

Un exemple de moyens de génération de vibrations sera décrit ultérieurement en référence aux figures 2A et 2B.

Afin de détecter les vibrations générées par les moyens de génération de vibrations 40, le turboréacteur 2 est équipé d'un capteur de vibrations 42 tel que par exemple un accéléromètre ou un vibromètre, connu en soi, et qui ne sera pas décrit plus en détails ici. De façon connue de l'homme du métier, le capteur de vibrations 42 est adapté à générer un signal vibratoire $S_{vibration}$ représentatif des vibrations émises par les moyens de génération de vibrations 40. Il peut s'agir avantageusement d'un capteur de vibrations déjà utilisé dans le turboréacteur 2 pour détecter des vibrations autres que celles générées par les moyens 40, comme par exemple des vibrations dues à une défaillance d'un organe moteur tel qu'un roulement, à une rupture d'un support ou à un déséquilibrage d'un rotor (balourd). Ce capteur aura été au préalable dûment sélectionné en fonction de sa sensibilité et des caractéristiques d'amplitude et de fréquence des vibrations émises par les moyens 40 pour divers régimes de fonctionnement du turboréacteur.

Le capteur de vibrations 42 est disposé, par exemple, sur une face supérieure 4b du carter de soufflante 4. En variante, il peut être placé en regard ou à proximité des moyens de génération de vibrations 40, par exemple sur le corps haute-pression 8.

Le turboréacteur 2 comporte également un capteur de vitesse 44, adapté à mesurer la vitesse de rotation de l'arbre accessoire 30 lors de son entraînement par l'arbre haute-pression 22. Un tel capteur de vitesse est connu en soi et est décrit notamment dans le document US 4 075 562. Dans l'exemple envisagé ici, le capteur de vitesse 44 est constitué notamment :

- d'une roue dentée 44a centrée sur l'axe de l'arbre accessoire 30 (entraînée en rotation par celui-ci) et dont les dents, espacées dans l'exemple décrit ici d'un angle constant $\alpha$, sont recouvertes ou composées d'un matériau magnétique ;
- d'un capteur magnétique 44b équipé d'une bobine d'induction montée en regard de la roue dentée 44a ; et
- d'un circuit de conditionnement 44c relié au capteur magnétique 44b.

De façon connue, lors de la rotation de la roue dentée 44a (i.e. lors de la rotation de l'arbre accessoire 30), le défilement des dents de la roue, recouvertes (ou composées) du matériau magnétique, excite la bobine d'induction du capteur magnétique 44b et génère un signal électrique (ex. un courant électrique) dont la fréquence est proportionnelle à la vitesse de rotation de la roue. Ce signal électrique est transformé par le circuit de conditionnement 44c en un signal pseudo-périodique $S_{roue}$ de forme sinusoïdale et dont les « pics » de sinusoïde (chaque pic correspond à une période de sinusoïde) sont représentatifs du passage des différentes dents de la roue devant le capteur magnétique 44b. Ainsi, en observant le signal $S_{roue}$, il est possible de comptabiliser le nombre de dents $N(t)$ (i.e. nombre de pics de sinusoïde) ayant défilé devant le capteur magnétique 44b à un instant $t$ donné par rapport à un instant de référence $t_0$ et de déterminer, à l'aide de l'angle $\alpha$ séparant les dents de la roue dentée, la position angulaire de l'arbre accessoire 30 à cet instant $t$ par rapport à sa position angulaire à l'instant de référence $\theta_{30}(t_0)$.

En outre, le turboréacteur 2 comprend un dispositif de calcul 46 adapté à déterminer la position angulaire de l'arbre haute-pression 22. Ce dispositif de calcul 46 comporte une mémoire 48, et est relié d'une part au capteur de vibrations 42 et d'autre part au capteur de vitesse 44.

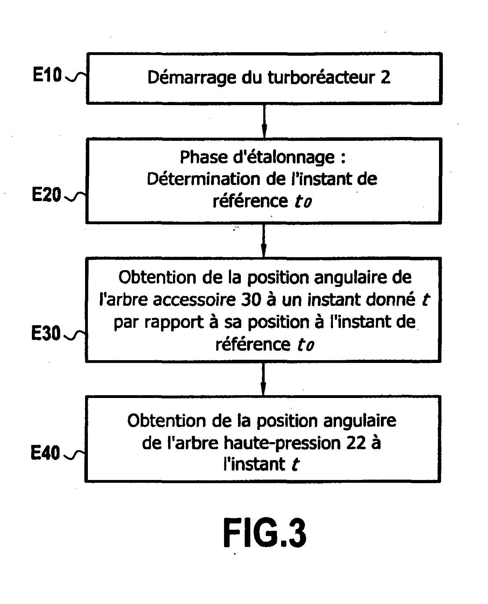

Nous allons maintenant décrire, en référence à la figure 3, les principales étapes du procédé de détermination selon l'invention lorsqu'il est mis en oeuvre dans le turboréacteur 2 pour déterminer la position angulaire de l'arbre haute-pression 22 à un instant donné.

A cette fin, selon un mode de réalisation particulier de l'invention, on utilise d'une part, le signal $S_{roue}$ représentatif de la position angulaire de l'arbre accessoire 30 en fonction du temps, et d'autre part, un instant de référence $t_0$ correspondant à un passage de l'arbre haute-pression 22 par la position angulaire de référence $\theta_0$ (c'est-à-dire tel que $\theta_{22}(t_0)=\theta_0(=0$ ici)) coïncidant avec le passage d'une dent de la roue dentée 44a devant le capteur magnétique 44b.

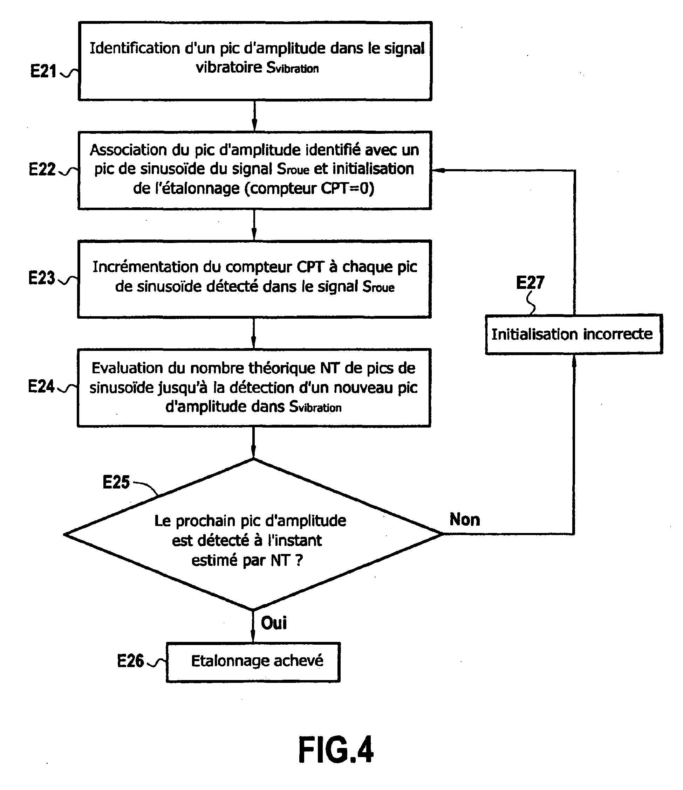

Cet instant de référence $t_0$ est déterminé, suite au démarrage du turboréacteur (étape E10), au cours d'une phase d'étalonnage (étape E20) détaillée ultérieurement en liaison avec la figure 4.

La position angulaire de l'arbre accessoire 30 par rapport à sa position à l'instant de référence $t_0$ (i.e. $\theta_{30}(t)$ - $\theta_{30}(t_0)$) peut alors être obtenue, à un instant donné quelconque $t$, à l'aide du signal $S_{roue}$ fourni par le capteur de vitesse 44, comme mentionné précédemment (étape E30). A cette fin, le dispositif de calcul 46 évalue le nombre $N(t)$ de dents ayant défilé devant le capteur magnétique 44b à l'instant $t$ en comptabilisant dans le signal $S_{roue}$ le nombre de pics de sinusoïde situés entre l'instant de référence $t_0$ et l'instant $t$ Pour cela, le dispositif de calcul 46 pourra notamment utiliser un compteur CPT (non représenté sur la figure 1) avantageusement initialisé à l'instant de référence $t_0$, et incrémenté à chaque nouveau pic de sinusoïde identifié dans le signal $S_{roue}$ fourni par le capteur de vitesse 44.

Pour des raisons d'implémentation, ce compteur pourra être également initialisé à zéro après un nombre entier $m$ ($m \geq 1$) prédéterminé de tours réalisés par l'arbre haute-pression 22. On détectera que $m$ tours ont été réalisés par l'arbre haute-pression en comparant la valeur du compteur CPT (i.e. le nombre de pics de sinusoïde identifiés dans le signal $S_{roue}$) avec un nombre théorique de pics correspondant à $m$ tours de l'arbre haute-pression et calculé à l'aide du rapport d'engrenage $k$.

La position angulaire de l'arbre accessoire par rapport à sa position à l'instant de référence $t_0$ est alors obtenue à l'aide de l'équation (Eq. 1) suivante :

$$\theta_{30}(t) - \theta_{30}(t_0) = \alpha N(t) \qquad \text{(Eq. 1)}$$

L'arbre haute-pression et l'arbre accessoire étant dans des positions angulaires aléatoires par rapport au point de référence au démarrage du turboréacteur, la connaissance de la position angulaire de l'arbre haute-pression à l'instant de référence $t_0$ permet de déduire directement sa position angulaire à un instant donné quelconque $t$ de la position angulaire de l'arbre accessoire à ce même instant. Ainsi, à partir de la valeur $\theta_{22}(t_0)$ et de la position angulaire de l'arbre accessoire 30 par rapport à sa position à l'instant de référence $t_0$, le dispositif de calcul 46 détermine la position angulaire $\theta_{22}(t)$ de l'arbre haute-pression à un instant donné $t$, à l'aide de l'équation (Eq. 2) ci-dessous (étape E40) :

$$\theta_{22}(t) = \theta_{22}(t_0) + k\left[\theta_{30}(t) - \theta_{30}(t_0)\right]$$
$$= \theta_0 + k\left[\theta_{30}(t) - \theta_{30}(t_0)\right] \quad \textbf{(Eq. 2)}$$

soit dans l'exemple décrit ici, après combinaison avec l'équation (Eq.1) :

$$\theta_{22}(t) = k\left[\theta_{30}(t) - \theta_{30}(t_0)\right] = k\alpha N(t) \quad \textbf{(Eq. 3)}$$

Nous allons maintenant détailler, en référence à la figure 4, les principales étapes mises en oeuvre au cours de la phase d'étalonnage (étape E20) pour déterminer l'instant de référence $t_0$. Cet instant de référence constitue en soi un référentiel temporel commun à l'arbre haute-pression 22 et à l'arbre accessoire 30, c'est-à-dire un référentiel permettant de déduire la position angulaire de l'un par rapport à l'autre à l'aide de l'équation (Eq.3) sans nécessairement connaître leurs positions respectives initiales.

Avantageusement, dans le mode de réalisation décrit ici, l'instant de référence $t_0$ est choisi de sorte que la détection d'une vibration émise par les moyens de génération de vibration 40 coïncide temporellement avec la détection du passage d'une dent de la roue dentée 44a devant le capteur magnétique 44b du capteur de vitesse. Les étapes suivantes sont ainsi mises en oeuvre au cours de la phase d'étalonnage pour déterminer cet instant de référence.

Lors du démarrage du turboréacteur 2, l'arbre haute-pression 22 est mis en rotation et entraîne l'arbre accessoire 30 par l'intermédiaire de l'arbre de renvoi 34. Alors que le turboréacteur fonctionne à bas régime, les moyens de génération de vibrations 40 génèrent une vibration à chaque passage de l'arbre haute-pression 22 par la position angulaire de référence $\theta_0$. Cette vibration peut être générée, par exemple, consécutivement à un choc d'un cliquet sur une saillie, comme décrit ultérieurement en référence aux figures 2A et 2B.

Chaque vibration ainsi générée est ensuite détectée par le capteur de vibrations 42 qui fournit alors un signal vibratoire $S_{vibration}$ représentatif de ces vibrations au dispositif de calcul 46. De façon connue, une vibration est caractérisée par une amplitude et une fréquence ou pulsation. Ainsi, les vibrations générées par les moyens de génération de vibrations 40 correspondent à une plage particulière d'amplitudes A et à une fréquence correspondant au régime de rotation du turboréacteur (ici bas régime).

Le dispositif de calcul 46 identifie, dans le signal $S_{vibration}$, le (ou les) pic(s) d'amplitude correspondant à la ou (les) vibration(s) générée(s) par les moyens de génération de vibrations 40 (étape E21). A cette fin, l'amplitude du signal vibratoire est comparée à un seuil prédéterminé correspondant aux vibrations générées par les moyens de génération de vibrations 40 (plage d'amplitudes A mentionnée précédemment). Lors de la rotation de l'arbre haute-pression 22, un tel pic d'amplitude est présent de façon cyclique dans le signal vibratoire (un pic pour chaque vibration générée), avec une fréquence correspondant au régime de rotation du turboréacteur.

Le dispositif de calcul 46 associe ensuite à un pic d'amplitude précédemment identifié dans le signal $S_{vibration,}$, un pic de sinusoïde du signal $S_{roue}$ (étape E22) qui correspond temporellement à ce pic d'amplitude. Si le pic d'amplitude n'est pas synchronisé avec un pic de sinusoïde, le dispositif de calcul lui associe le pic de sinusoïde du signal $S_{roue}$ le plus proche le suivant. Autrement dit, ce pic de sinusoïde représente l'instant auquel la vibration générée par les moyens de génération de vibrations 40 a été détectée avec une précision en rapport avec le nombre de dents de la roue dentée et le rapport d'engrenage $k$. Suite à cette étape d'association, on considère que l'étalonnage est initialisé.

Le dispositif de calcul 46 comptabilise ensuite dans le signal $S_{roue}$ les pics de sinusoïde succédant à ce pic de sinusoïde associé au pic d'amplitude (étape E23), et ce, jusqu'à la détection d'un nouveau pic d'amplitude dans le signal $S_{vibration}$ correspondant à une nouvelle vibration générée par les moyens de génération de vibrations 40. A cette fin, il peut utiliser par exemple le compteur CPT, initialisé à zéro à chaque association d'un pic de sinusoïde à un pic d'amplitude (i.e. à chaque initialisation de la phase de l'étalonnage) et incrémenté à chaque pic de sinusoïde détecté dans le signal $S_{roue}$.

Le dispositif de calcul 46 évalue en outre (étape E24), à partir du nombre de dents de la roue dentée et du rapport d'engrenage $k$, le nombre théorique NT de pics de sinusoïde censés être observés entre le pic de sinusoïde associé au pic d'amplitude et le pic de sinusoïde devant être associé à la prochaine vibration attendue. Ce nombre théorique NT donne une estimation de l'instant (i.e. pic de sinusoïde) auquel le prochain pic d'amplitude correspondant à la prochaine vibration générée par les moyens 40 est attendu.

Si le prochain pic d'amplitude dans le signal $S_{vibration}$ est bien détecté à cet instant là (test E25), alors l'étalonnage est achevé (étape E26). L'instant correspondant au pic de sinusoïde associé au pic d'amplitude précédent (c'est-à-dire au pic d'amplitude identifié à l'étape E21) est considéré comme instant de référence $t_0$. Le suivi des pics de sinusoïde $N(t)$ est alors réalisé à partir de cet instant-là en continu à l'aide du compteur, et ce pendant toute la durée du fonctionnement du turboréacteur. De cette sorte, il est possible d'associer à un événement quelconque à venir un pic de sinusoïde du signal $S_{roue}$ et une valeur N(t) du compteur, et ainsi de connaître la position angulaire de l'arbre haute-pression 22 lors de la détection de cet événement.

Si le prochain pic d'amplitude dans le signal $S_{vibration}$ n'est pas détecté à l'instant estimé, alors l'initialisation est considérée comme incorrecte (étape E27). Un nouvel étalonnage est entrepris à partir de ce pic d'amplitude, et les étapes E22 à E27 sont reprises jusqu'à identifier l'instant de référence $t_0$.

En variante, l'étalonnage peut être réalisé sur plusieurs tours.

La phase d'étalonnage sera préférentiellement de durée limitée et établie au démarrage du turboréacteur, tant que le turboréacteur fonctionne à bas régime (c'est-à-dire en dessous d'une vitesse particulière de rotation de l'arbre haute-pression par exemple).

L'invention permet ainsi de façon particulièrement avantageuse de déterminer, par exemple suite à la détection d'un balourd par un capteur de vibrations du turboréacteur (qui peut être le capteur de vibrations 42), la position angulaire de l'arbre haute-pression au moment de la détection.

En effet, sur détection du balourd à un instant donné, la lecture du compteur CPT permet de déduire de l'équation (Eq.3), la position angulaire de l'arbre haute-pression 22 à cet instant. La position angulaire du balourd est alors déterminée à partir de cette position angulaire de l'arbre haute-pression 22 et de l'écart angulaire connu existant entre le capteur de vibrations utilisé pour la détection du balourd et les moyens de génération de vibrations 40.

La position angulaire du balourd ainsi déterminée peut alors être stockée dans la mémoire 48 du dispositif de calcul 46. Elle pourra être utilisée ultérieurement pour identifier la localisation sur l'arbre haute-pression 22 de la défaillance provoquant le balourd et corriger cette défaillance au cours d'une opération de maintenance.

Nous allons maintenant décrire, en référence aux figures 2A et 2B, un exemple de moyens de génération de vibrations 40 pouvant être mis en oeuvre dans l'invention.

Dans cet exemple, l'arbre haute-pression 22 comporte un élément annulaire 50, centré sur l'axe longitudinal X-X du turboréacteur 2 et maintenu sur l'arbre d'un côté par une butée 52 et de l'autre par un écrou 54 vissé sur l'arbre. L'élément annulaire 50 est disposé concentriquement autour d'une portion annulaire de stator 56 et comporte sur sa face interne 50a un cliquet à ressort 58. La portion annulaire de stator 56, quant à elle, comporte sur sa face externe 56a une saillie 62.

Le cliquet 58 peut pivoter autour d'un axe $\Delta$ parallèle à l'axe X-X et il est couplé à un ressort 60. La position au repos du ressort 60 est telle que le cliquet 58 peut venir buter contre la saillie 62 à chaque passage de l'arbre haute-pression 22 par la position de référence $\theta_0$. Le choc du cliquet 58 sur la saillie 62 génère ainsi une vibration.

L'élément annulaire 50 de l'arbre haute-pression 22 comporte en outre une cavité 64, dans laquelle le cliquet 58 peut se nicher suite au choc avec la saillie 62, avant de se repositionner sous l'effet de la tension de rappel du ressort 60.

De façon avantageuse par ailleurs, le cliquet 58 peut venir se loger dans cette cavité 64 sous l'effet de la force centrifuge liée à la rotation de l'arbre 22, i.e., lorsque la force centrifuge est supérieure à la tension de rappel du ressort 60. Ainsi, une vibration n'est générée par les moyens de génération de vibrations 40 que durant une phase de démarrage du turboréacteur 2 (correspondant à un fonctionnement à bas régime). La phase d'étalonnage décrite précédemment sera, de préférence, réalisée au cours de cette phase de démarrage. A partir d'un régime de fonctionnement particulier du turboréacteur 2 (pour lequel la force centrifuge de rotation est supérieure à la tension de rappel du ressort 60), on assiste à un effet de « débrayage », à savoir que le cliquet à ressort 58 vient se loger dans la cavité 64 de sorte à ne plus buter contre la saillie 62 et à ne plus générer de vibration lors du passage de l'arbre haute-pression par la position de référence $\theta_0$. De cette sorte, on évite l'usure des moyens de génération de vibrations 40 et a fortiori les pannes résultant de cette usure.

Dans cet exemple, les moyens de génération de vibrations 40 sont réalisés à l'aide d'un cliquet à ressort. Toutefois, il est possible d'utiliser d'autres types de dispositifs afin de produire un effet similaire, tels que par exemple une lame souple ou un cliquet à billes.

## Revendications

1. Procédé de détermination de la position angulaire d'un premier rotor (22) de turboréacteur (2), **caractérisé en ce qu'**il consiste à :

   - générer au moins une vibration au cours d'une rotation du premier rotor (22), chaque vibration étant générée lors du passage du premier rotor par une même position angulaire de référence ;
   - détecter les vibrations générées ;
   - obtenir (E30) la position angulaire à un instant donné d'un second rotor (30) du turboréacteur par rapport à la position angulaire qu'il occupait à un instant de référence représentatif de la détection d'une des vibrations, ledit second rotor étant couplé en rotation au premier rotor et ayant une vitesse de rotation différente de la vitesse de rotation de celui-ci ; et
- déterminer (E40), à partir de la position angulaire du second rotor, la position angulaire du premier rotor à cet instant donné.

2. Procédé selon la revendication 1, **caractérisé en ce qu'**on obtient (E30) la position angulaire du second rotor (30) à partir d'un signal fourni par un capteur (44b,44c) et représentatif du défilement des dents d'une roue dentée (44a) positionnée sur le second rotor devant ce capteur.

3. Procédé selon la revendication 2, **caractérisé en ce qu'**on choisit (E20) comme instant représentatif de la détection d'une vibration un instant pour lequel le passage du premier rotor (22) par la position de référence coïncide avec le passage d'une dent de la roue dentée (44a) devant le capteur.

4. Procédé de détermination de la position angulaire d'un balourd, détecté à un instant donné sur un premier rotor d'un turboréacteur, le turboréacteur comportant en outre un second rotor couplé en rotation au premier rotor et dont la vitesse de rotation est différente de la vitesse de rotation de celui-ci, ledit procédé étant **caractérisé en ce qu'**il consiste à :

   - déterminer la position angulaire du premier rotor à l'instant auquel a été détecté le balourd, en fonction de la position angulaire du second rotor selon un procédé de détermination de la position angulaire selon l'une quelconque des revendications 1 à 3 ; et à
   - déterminer la position angulaire du balourd à cet instant, à partir de la position angulaire du premier rotor.

5. Système de détermination de la position angulaire d'un premier rotor (22) de turboréacteur (2), **caractérisé en ce qu'**il comprend :

   - des moyens (40) de génération de vibrations au cours d'une rotation du premier rotor (22), chaque vibration étant générée lors du passage du premier rotor (22) par une même position angulaire de référence ;
   - des moyens (42) de détection des vibrations générées ;
   - des moyens (44,46) d'obtention de la position angulaire à un instant donné d'un second rotor (30) du turboréacteur par rapport à la position angulaire qu'il occupait à un instant de référence représentatif de la détection d'une des vibrations, ledit second rotor étant couplé en rotation au premier rotor et ayant une vitesse de rotation différente de la vitesse de rotation de celui-ci ; et
   - des moyens (46) de détermination, à partir de la position angulaire du second rotor, de la position angulaire du premier rotor à cet instant donné.

6. Système selon la revendication 5, **caractérisé en ce que** les moyens (40) de génération de vibrations sont adaptés à ne plus générer de vibration lors du passage du premier rotor (22) par la position angulaire de référence à partir d'un régime de fonctionnement particulier du turboréacteur (2).

7. Système selon la revendication 5 ou 6, **caractérisé en ce que** les moyens (40) de génération de vibrations comportent un cliquet (58) ou une lame souple et une saillie (62), une vibration étant générée par un choc du cliquet ou une lame souple sur la saillie lors du passage du premier rotor (22) par la position angulaire de référence.

8. Système selon la revendication 7, **caractérisé en ce que** le premier rotor (22) comporte un élément annulaire (50) disposé autour d'une portion annulaire (56) de stator, le cliquet ou la lame souple étant localisé sur la face interne (50a) de l'élément annulaire (50) du premier rotor et la saillie sur la face externe (56a) de la portion annulaire (56) de stator.

9. Système selon l'une quelconque des revendications 5 à 8, **caractérisé en ce que** le premier rotor est l'arbre haute-pression (22) du turboréacteur et le second rotor est un arbre (30) lié à un boîtier d'entraînement d'accessoires (12).

10. Turboréacteur (2) **caractérisé en ce qu'**il comporte au moins un système selon l'une quelconque des revendications 5 à 9.

**Patentansprüche**

1. Verfahren zum Bestimmen der Winkelstellung eines ersten Rotors (22) eines Turbostrahltriebwerks (2), **dadurch**

**gekennzeichnet, dass** es darin besteht:

- wenigstens eine Vibration im Laufe einer Rotation des ersten Rotors (22) zu erzeugen, wobei jede Vibration beim Durchgang des ersten Rotors durch eine gleiche Referenzwinkelstellung erzeugt wird,
- die erzeugten Vibrationen zu erfassen,
- die Winkelstellung, zu einem gegebenen Zeitpunkt, eines zweiten Rotors (30) des Turbostrahltriebwerks im Verhältnis zu der Winkelstellung, die er zu einem für die Erfassung von einer der Vibrationen repräsentativen Referenzzeitpunkt einnahm, zu erhalten (E30), wobei der zweite Rotor mit dem ersten Rotor drehgekoppelt ist und eine von dessen Rotationsgeschwindigkeit abweichende Rotationsgeschwindigkeit aufweist, und
- anhand der Winkelstellung des zweiten Rotors die Winkelstellung des ersten Rotors zu diesem gegebenen Zeitpunkt zu bestimmen (E40).

2. Verfahren nach Anspruch 1, **dadurch gekennzeichnet, dass** die Winkelstellung des zweiten Rotors (30) anhand eines Signals erhalten wird (E30), das durch einen Sensor (44b, 44c) geliefert wird und für das Vorbeilaufen der Zähne eines an dem zweiten Rotor positionierten Zahnrads (44a) an diesem Sensor repräsentativ ist.

3. Verfahren nach Anspruch 2, **dadurch gekennzeichnet, dass** als für die Erfassung einer Vibration repräsentativer Zeitpunkt ein Zeitpunkt gewählt wird (E20), bei dem der Durchgang des ersten Rotors (22) durch die Referenzposition mit dem Vorbeilaufen eines Zahns des Zahnrads (44a) an dem Sensor zusammenfällt.

4. Verfahren zum Bestimmen der Winkelstellung einer Unwucht, die zu einem gegebenen Zeitpunkt an einem ersten Rotor eines Turbostrahltriebwerks erfasst wird, wobei das Turbostrahltriebwerk ferner einen zweiten Rotor umfasst, der mit dem ersten Rotor drehgekoppelt ist und dessen Rotationsgeschwindigkeit von der Rotationsgeschwindigkeit dieses verschieden ist, wobei das Verfahren **dadurch gekennzeichnet ist, dass** es darin besteht:

- die Winkelstellung des ersten Rotors zu dem Zeitpunkt, zu dem die Unwucht erfasst worden ist, in Abhängigkeit von der Winkelstellung des zweiten Rotors entsprechend einem Verfahren zum Bestimmen der Winkelstellung nach einem der Ansprüche 1 bis 3 zu bestimmen, und
- die Winkelstellung der Unwucht zu diesem Zeitpunkt anhand der Winkelstellung des ersten Rotors zu bestimmen.

5. System zum Bestimmen der Winkelstellung eines ersten Rotors (22) eines Turbostrahltriebwerks (2), **dadurch gekennzeichnet, dass** es umfasst:

- Mittel (40) zum Erzeugen von Vibrationen im Laufe einer Rotation des ersten Rotors (22), wobei jede Vibration beim Durchgang des ersten Rotors (22) durch eine gleiche Referenzwinkelstellung erzeugt wird,
- Mittel (42) zum Erfassen der erzeugten Vibrationen,
- Mittel (44, 46) für den Erhalt der Winkelstellung, zu einem gegebenen Zeitpunkt, eines zweiten Rotors (30) des Turbostrahltriebwerks im Verhältnis zu der Winkelstellung, die er zu einem für die Erfassung von einer der Vibrationen repräsentativen Referenzzeitpunkt einnahm, wobei der zweite Rotor mit dem ersten Rotor drehgekoppelt ist und eine von dessen Rotationsgeschwindigkeit abweichende Rotationsgeschwindigkeit aufweist, und
- Mittel (46) zum Bestimmen der Winkelstellung des ersten Rotors zu diesem gegebenen Zeitpunkt anhand der Winkelstellung des zweiten Rotors.

6. System nach Anspruch 5, **dadurch gekennzeichnet, dass** die Mittel (40) zum Erzeugen von Vibrationen dazu ausgelegt sind, ab einer besonderen Betriebsdrehzahl des Turbostrahltriebwerks (2) keine Vibration mehr beim Durchgang des ersten Rotors (22) durch die Referenzwinkelstellung zu erzeugen.

7. System nach Anspruch 5 oder 6, **dadurch gekennzeichnet, dass** die Mittel (40) zum Erzeugen von Vibrationen eine Klinke (58) oder eine flexible Zunge und einen Vorsprung (62) umfassen, wobei eine Vibration durch einen Stoß der Klinke oder einer flexiblen Zunge auf den Vorsprung beim Durchgang des ersten Rotors (22) durch die Referenzwinkelstellung erzeugt wird.

8. System nach Anspruch 7, **dadurch gekennzeichnet, dass** der erste Rotor (22) ein ringförmiges Element (50), das um einen ringförmigen Statorabschnitt (56) angeordnet ist, umfasst, wobei die Klinke oder die flexible Zunge sich auf der Innenseite (50a) des ringförmigen Elements (50) des ersten Rotors und der Vorsprung sich auf der Außenseite (56a) des ringförmigen Statorabschnitts (56) befindet.

9.  System nach einem der Ansprüche 5 bis 8, **dadurch gekennzeichnet, dass** der erste Rotor die Hochdruckwelle (22) des Turbostrahltriebwerks ist und der zweite Rotor eine mit einem Hilfsgeräteantrieb (12) verbundene Welle (30) ist.

10. Turbostrahltriebwerk (2), **dadurch gekennzeichnet, dass** es wenigstens ein System nach einem der Ansprüche 5 bis 9 umfasst.


**Claims**

1.  A method of determining the angular position of a first rotor (22) of a turbojet (2), the method being **characterized in that** it consists in:

    · generating at least one vibration pulse during a rotation of the first rotor (22), each vibration pulse being generated when the first rotor passes through a given reference angular position;
    · detecting the vibration generated thereby;
    · obtaining (E30) the angular position at a given instant of a second rotor (30) of the turbojet relative to the angular position that it occupied at a reference instant representative of detecting a vibration pulse, said second rotor being coupled in rotation with the first rotor and having a speed of rotation different from the speed of rotation thereof; and
    · determining (E40) from the angular position of the second rotor, the angular position of the first rotor at said given instant.

2.  A method according to claim 1, **characterized in that** the angular position of the second rotor (30) is obtained (E30) from a signal delivered by a sensor (44b, 44c) and representative of the passage of the teeth of a toothed wheel (44a) that is positioned on the second rotor going past the sensor.

3.  A method according to clam 2, **characterized in that** the instant representative of detecting a vibration pulse is selected (E20) as an instant at which the passage of the first rotor (22) through the reference position coincides with a tooth of the toothed wheel (44a) going past the sensor.

4.  A method of determining the angular position of an unbalance that is detected at a given instant on a first rotor of a turbojet, the turbojet also including a second rotor coupled in rotation with the first rotor and having a speed of rotation that is different from the speed of rotation thereof, said method being **characterized in that** it consists in:

    · determining the angular position of the first rotor at the instant at which the unbalance was detected, as a function of the angular position of the second rotor by using a method of determining angular position according to any one of claims 1 to 3; and
    · determining the angular position of the unbalance at said instant from the angular position of the first rotor.

5.  A system for determining the angular position of a first rotor (22) of a turbojet (2), the system being **characterized in that** it comprises:

    · means (40) for generating vibration pulses during a rotation of the first rotor (22), each vibration pulse being generated on the first rotor (22) passing through a given reference angular position;
    · means (42) for detecting the generated vibration pulses;
    · means (44, 46) for obtaining the angular position at a given instant of a second rotor (30) of the turbojet relative to the angular position it occupied at a reference instant representative of a vibration pulse being detected, said second rotor being coupled to rotate with said first rotor and having a speed of rotation that is different from the speed of rotation thereof; and
    · means (46) for determining the angular position of the first rotor at said given instant on the basis of the angular position of the second rotor.

6.  A system according to claim 5, **characterized in that** the means (40) for generating vibration pulses are adapted to cease generating vibration pulses on the first rotor (22) passing through the reference angular position as from a particular speed of operation of the turbojet (2).

7.  A system according to claim 5 or claim 6, **characterized in that** the means (40) for generating vibration pulses comprise a projection (62) and a pawl (58) or a flexible blade, a vibration pulse being generated by the pawl or the flexible blade striking against the projection as the first rotor (22) passes through the reference angular position.

8. A system according to claim 7, **characterized in that** the first rotor (22) includes an annular element (50) placed around an annular stator portion (56), the pawl or the flexible blade being located on the inside face (50a) of the annular element (50) of the first rotor and the projection being located on the outside face (56a) of the annular portion (56) of the stator.

9. A system according to any one of claims 5 to 8, **characterized in that** the first rotor is the high pressure shaft (22) of the turbojet and the second rotor is a shaft (30) connected to an accessory gearbox (12).

10. A turbojet (2), **characterized in that** it includes at least one system according to any one of claims 5 to 9.

**FIG.1**

EP 2 307 672 B1

**FIG.2A**

**FIG.2B**

E10 ⟞ Démarrage du turboréacteur 2

E20 ⟞ Phase d'étalonnage :
Détermination de l'instant de
référence $t_0$

E30 ⟞ Obtention de la position angulaire de
l'arbre accessoire 30 à un instant donné $t$
par rapport à sa position à l'instant de
référence $t_0$

E40 ⟞ Obtention de la position angulaire
de l'arbre haute-pression 22 à
l'instant $t$

# FIG.3

E21 — Identification d'un pic d'amplitude dans le signal vibratoire Svibration

E22 — Association du pic d'amplitude identifié avec un pic de sinusoïde du signal Sroue et initialisation de l'étalonnage (compteur CPT=0)

E23 — Incrémentation du compteur CPT à chaque pic de sinusoïde détecté dans le signal Sroue

E24 — Evaluation du nombre théorique NT de pics de sinusoïde jusqu'à la détection d'un nouveau pic d'amplitude dans Svibration

E25 — Le prochain pic d'amplitude est détecté à l'instant estimé par NT ?

Non

E27 — Initialisation incorrecte

Oui

E26 — Etalonnage achevé

# FIG.4

**EP 2 307 672 B1**

**RÉFÉRENCES CITÉES DANS LA DESCRIPTION**

**Documents brevets cités dans la description**

- EP 1777526 A
- US 4075562 A
- US 5258923 A